# EUROPÄISCHE PATENTSCHRIFT

(11) **EP 3 909 414 B1**
(45) Veröffentlichungstag und Bekanntmachung des Hinweises auf die Patenterteilung: **28.01.2026**
(21) Anmeldenummer: 21173303.5
(22) Anmeldetag: 11.05.2021
(51) Int. Cl.: A01D 41/14

(54) **SELBSTFAHRENDE LANDWIRTSCHAFTLICHE ERNTEMASCHINE**
SELF-PROPELLED AGRICULTURAL HARVESTER
MACHINE AGRICOLE DE RÉCOLTE AUTONOME

(30) Priorität: 14.05.2020 DE 102020002892
(43) Veröffentlichungstag der Anmeldung: 17.11.2021
(73) Patentinhaber: Maschinenfabrik Bernard Krone GmbH & Co. KG, 48480 Spelle (DE)
(72) Erfinder: Ester, Markus, 49832 Beesten (DE)

(56) Entgegenhaltungen:
- EP-A1- 3 562 294
- US-A- 5 673 543
- US-A1- 2006 196 161
- US-B2- 7 404 283

## Beschreibung

### Selbstfahrende landwirtschaftliche Erntemaschine

Die Erfindung bezieht sich auf eine selbstfahrende landwirtschaftliche Erntemaschine mit einem vor einer Fahrerkabine angeordneten und quer zur Fahrt- und Arbeitsrichtung ausgerichteten Erntegerät, das als Mäh- und Fördereinrichtung ausgebildet ist und in Arbeitsfahrtrichtung eine linke Erntegeräteinheit und eine rechte Erntegeräteinheit mit jeweils einem Fördermittel aufweisenden Endlosförderer umfasst, wobei die Endlosförderer quer zur Arbeitsfahrtrichtung einem zentralen Ernteguteinzug Erntegut zufördern.

Derartige selbstfahrende landwirtschaftliche Erntemaschinen sind beispielsweise aus der DE 10 2005 004 004 A1 und der US 2006/196161 A1 bekannt, welche eine Erntemaschine gemäß dem Oberbegriff des Anspruchs 1 offenbart, und dienen insbesondere in ihrer Ausbildung als selbstfahrende Häcksler dazu, stängelartiges Erntegut zu ernten, bei der das Erntegut von einer Förder- und Schneideinrichtung aufgenommen, abgeschnitten und über einen Ernteguteinzug einer Häckseleinrichtung zugeführt wird. Bei der vorbekannten selbstfahrenden landwirtschaftlichen Erntemaschine besteht das vor der Fahrerkabine angeordnete und sich quer zur Arbeits- und Fahrtrichtung ausgerichtete Erntegerät aus insgesamt vier Erntegeräteinheiten, die jeweils mit einem Endlosförderer ausgerüstet sind. Die dem zentralen Ernteguteinzug benachbarten zentralen Erntegerätteile sind nicht verschwenkbar ausgebildet. Diesen sind jeweilige Erntegeräteinheiten einmal auf der in Fahrtrichtung der Erntemaschine linken Seite und einmal auf der in Fahrtrichtung der Erntemaschine rechten Seite eine linke Erntegeräteinheit und ein rechte Erntegeräteinheit zugeordnet, die um fahrtrichtungsparallele Achsen aus einer Arbeitsstellung in eine Transportstellung hoch zu verschwenken sind und darüber hinaus oberhalb von den zentralen Erntegeräteinheiten als Paket abzulegen sind, um die erforderliche Erntemaschinenbreite für die Straßenfahrt einhalten zu können bei ansonsten großer Arbeitsbreite während einer Arbeitsfahrt.

Nachteilig bei dieser bekannten landwirtschaftlichen Erntemaschine ist, dass für die insgesamt vier Endlosförderer der vier Erntegeräteinheiten jeweils separate Antriebsstränge mit Getriebeteilen zur Verfügung zu stellen sind. Darüber hinaus ist nachteilig, dass während der Arbeitsfahrt das geschnittene Erntegut die Übergänge zwischen der linken Erntegeräteinheit und der zugeordneten zentralen Erntegeräteinheit und zwischen der rechten Erntegeräteinheit und der zugeordneten zentralen Erntegeräteinheit vom Erntegut zu überwinden sind, was Erntegutverluste verursachen kann.

Die Druckschrift US 5,673,543 B2 offenbart einen klappbaren Maisvorsatz, mit einem ersten und einem zweiten Schneckenförderer, wobei zwischenliegende Enden der Schneckenförderer in einer Erntestellung miteinander gekuppelt und in einer Nichterntestellung voneinander getrennt sind.

Es ist Aufgabe der vorliegenden Erfindung, die selbstfahrende landwirtschaftliche Erntemaschine der eingangs genannten Art dahingehend zu verbessern, dass der Erntegutstrom an den Erntegerätteilen sowohl auf der linken Seite der Erntemaschine als auch auf der rechten Seite der Erntemaschine verbessert ist.

Bei der selbstfahrenden landwirtschaftlichen Erntemaschine der eingangs genannten Art sind das in Arbeitsfahrtrichtung linke verschwenkbare Erntegerätteil und das in Arbeitsfahrtrichtung rechte verschwenkbare Erntegerätteil in der Arbeitsstellung mit dem jeweils zugeordneten zentralen, dem Ernteguteinzug vorgeordneten Erntegerätteil der Erntegeräteinheit mit jeweils einem gemeinsamen Endlosförderer versehen , wobei am jeweiligen gemeinsamen Endlosförderer und/oder an einem dem jeweiligen gemeinsamen Endlosförderer zugeordneten Rahmen der Erntegeräteinheit zumindest eine Trennstelle vorgesehen ist, an der das verschwenkbare linke bzw. das verschwenkbare rechte Erntegerätteil aus einer Arbeitsstellung in eine verschwenkte Transportstellung und zurück überführbar ist.

Die selbstfahrende landwirtschaftliche Erntemaschine zeichnet sich dadurch aus, der jeweils gemeinsame Endlosförderer jeder Erntegeräteinheit zwei Trennstellen aufweist, einmal bei einem in Arbeitsfahrtrichtung vorderen Trum und einmal bei einem in Arbeitsfahrtrichtung hinteren Trum.

Damit ist eine selbstfahrende landwirtschaftliche Erntemaschine zur Verfügung gestellt, bei der das linke Erntegerätteil mit dem in Förderrichtung nachgeordneten zentralen und dem Ernteeinzug direkt vorgeordnete Erntegerätteil als auch das in Arbeits- und Fahrtrichtung rechte Erntegerätteil mit dem diesem zugeordneten, dem Ernteeinzug direkt vorgeordneten zentralen Erntegerätteil zu einer linken Erntegeräteinheit und einer rechten Erntegeräteinheit zusammengefasst sind, so dass während der Arbeits- und Erntefahrt Übergänge zwischen diesen jeweiligen beiden Erntegerätteilen einmal auf der linken und einmal auf der rechten Seite aufgrund des gemeinsamen Endlosförderers vermieden sind. Demzufolge kann auch dem gemeinsamen Endlosförderer sowohl auf der linken als auch auf der rechten Geräteeinheitsseite ein gemeinsamer Antriebsstrang mit einem gemeinsamen Getriebe zugeordnet sein, womit sich der Bau- und Montageaufwand wesentlich verringert bei verbesserten Ernteeigenschaften. Gleichwohl lässt sich sowohl das äußere linke Erntegerätteil als auch das äußere rechte Erntegerätteil aufgrund der vorgesehenen Trennstelle am gemeinsamen Endlosförderer als auch an einem, dem Endlosförderer sowohl auf der linken als auch auf der rechten Erntegeräteinheitsseite vorgesehenen Grundrahmen aus einer Transportstellung, in der der jeweils gemeinsame Endlosförderer getrennt ist, in die Arbeitsstellung mit dann sehr großer Erntemaschinenbreite verschwenken. In dieser Arbeitsstellung kann der jeweils gemeinsamen Endlosförderer an der Trennstelle wieder verbunden werden, so dass dieser jeweilige Endlosförderer seine Erntetätigkeit aufnehmen und bewerkstelligen kann.

Der jeweils gemeinsame Endlosförderer jeder Erntegeräteinheit weist zwei Trennstellen auf, einmal bei dem in Fahrtrichtung vorderen Trum und einmal bei dem in Fahrtrichtung hinteren Trum. Denkbar ist auch, dass an dem Endlosförderer mehrere Trennstellen vorgesehen sind, so dass der vordere sowie der hintere Trum an mehreren Stellen getrennt werden kann. Alternativ ist es auch möglich, dass ein aus zwei oder drei übereinander liegenden Ebenen gebildeter Endlosförderer in der obersten Ebene mit einem Gelenk versehen ist und in den unteren Ebenen eine Trennstelle aufweist, so dass der Endlosförderer über das Gelenk, ohne dort getrennt zu sein, in eine Transportstellung aus der Arbeitsstellung verschwenkt werden kann. Ein zugeordneter Rahmen weist auch entsprechende Trennstellen auf und ist beispielsweise über Hydraulik- oder Pneumatikzylinder aus der Arbeitsstellung in die Transportstellung zu verschwenken und auch aus der Transportstellung zurück in die Arbeitsstellung.

Dazu kann eine entsprechende Tragvorrichtung vorgesehen sein mit Tragarmen, an der z B. Hydraulik- oder Pneumatikzylinder angreifen. Der Endlosförderer kann in verschiedenen Hochebenen, beispielsweise in zwei oder drei übereinander liegenden Ebenen, Mäh- und/oder Förderelemente aufweisen, die nach außen ragen, wobei das Gelenk bevorzugt ermaßen in der obersten Ebene vorgesehen ist. Darüber hinaus soll es ermöglicht sein, dass für einen einzuleitenden Schwenkvorgang der jeweils äußeren Erntegeräteteile (links und rechts) automatisiert der jeweilige gemeinsame Endlosförderer von einer Steuereinrichtung gesteuert automatisiert in eine Position zu verfahren ist, an der die Trennstellen sowohl des Endlosförderers als auch eines zugeordneten Rahmens bzw. auch ein Gelenk, das an dem Endlosförderer vorgesehen ist, eine Position einnimmt, in der entsprechenden Schwenkebene, so dass sichergestellt ist, dass nach Einnahme dieser Schwenkposition die Betätigungselemente wie Zylinder aktiviert werden können, um den entsprechenden Schwenkvorgang aus der Arbeitsstellung in die Transportstellung oder aus der Transportstellung zurück in die Arbeitsstellung zu vollziehen.

Die Verbindung der Teile des jeweiligen gemeinsamen Endlosförderers und eine entsprechende Entriegelung der Teile des jeweiligen gemeinsamen Endlosförderers soll auch bevorzugt automatisiert vorgenommen werden. Dazu ist bevorzugter maßen eine Entriegelungs- und Verriegelungsvorrichtung vorgesehen, die hydraulisch, pneumatisch und/oder elektrisch betätigbare Stellmittel zum Verbinden und zum Entriegeln des jeweiligen gemeinsamen Endlosförderers aufweist. Diese Entriegelungs- und Verriegelungsvorrichtung kann nach Art einer scherenartigen Schwinge ausgestaltet sein mit um eine Schwenkachse verschwenkbaren Schwingarmen, die aufein-ander zu und voneinander wegzubewegen sind zum Entriegeln und zum Verriegeln des jeweiligen gemeinsamen Endlosförderers.

Zum Verbinden und zum Entriegeln von Teilen des gemeinsamen Endlosförderers können Verriegelungsglieder vorgesehen sein, die sich gegen die Kraft einer Feder zusammendrücken lassen, um aus entsprechenden Aufnahmen von Teilen des gemeinsamen Endlosförderers herausbewegt zu werden, um eine Verbindung zu lösen. Dazu können diese Verriegelungsglieder auch teleskopierbar sein. Als Stellmittel zum Zusammendrücken und Freigeben eines Verriegelungsgliedes können auch wiederum hydraulisch, pneumatisch und/oder elektrisch betätigbare Stellmittel zum Einsatz kommen.

Zur weiteren Erläuterung der Erfindung wird auf weitere Unteransprüche, die nachfolgende Beschreibung und die Zeichnung verwiesen. In der Zeichnung zeigen:

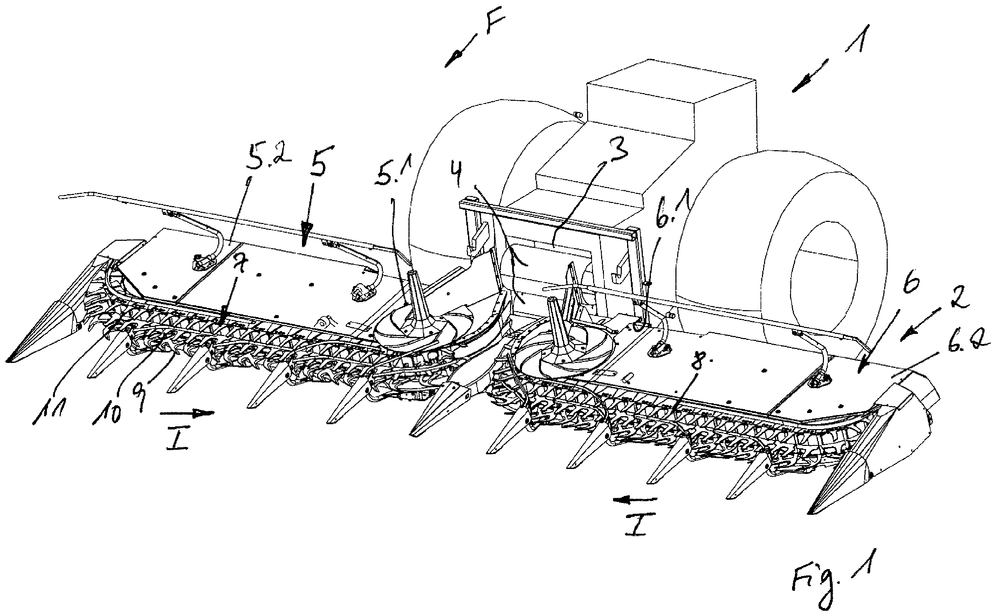

- Fig. 1:: eine perspektivische Darstellung eines Ausführungsbeispiels einer erfindungsgemäßen selbstfahrenden landwirtschaftlichen Erntemaschine mit einem vor einer nicht dargestellten Fahrerkabine angeordneten, sich quer zur Fahrtrichtung erstreckenden Erntegerät;
- Fig. 2:: eine Einzeldarstellung einer Entriegelungs- und Verriegelungsvorrichtung für Förderelemente eines ansonsten nicht weiter dargestellten gemeinsamen Endlosförderers in einer ersten Betriebsstellung (Entriegelungsstellung);
- Fig. 3:: eine zu Fig. 2 analoge Darstellung der Entriegelungs- und Verriegelungsvorrichtung in der Verriegelungsstellung;
- Fig. 4:: eine zur Fig. 1 analoge perspektivische Darstellung des Ausführungsbeispiels nach der Erfindung, bei dem das in Fahrtrichtung F rechte Erntegerätteil der rechten Erntegeräteinheit in die Transportstellung verschwenkt ist, und

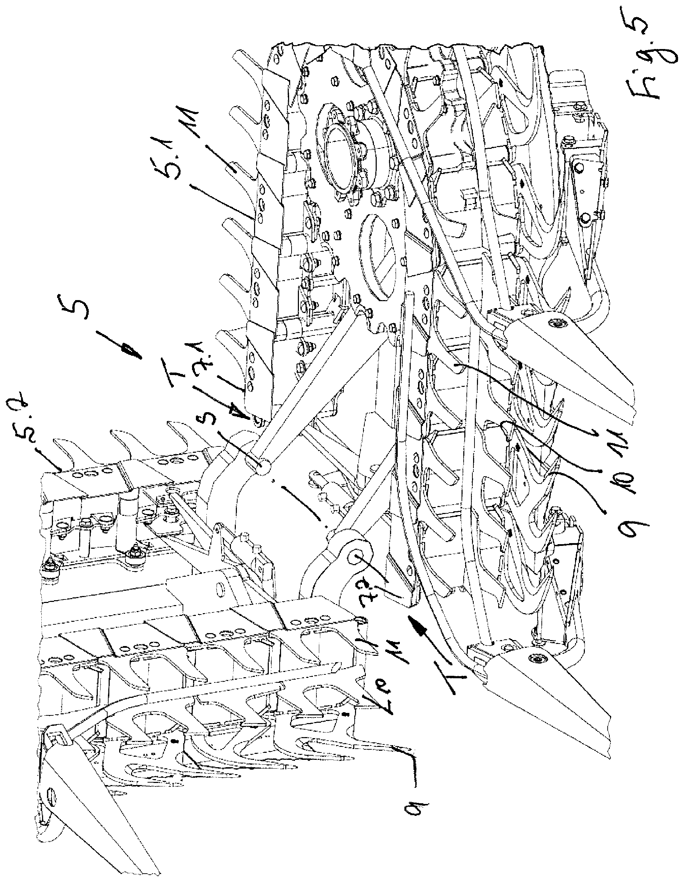

- Fig. 5:: ausschnittsweise vergrößert die Darstellung des hochverschwenkten rechten Erntegerätteils des Ausführungsbeispiels nach Fig. 4.

In der Zeichnung sind grundsätzlich übereinstimmende Teile mit übereinstimmenden Bezugsziffern versehen.

Allgemein mit 1 ist eine selbstfahrende landwirtschaftliche Erntemaschine beziffert, die in dem gezeigten Ausführungsbeispiel als Feldhäcksler zum Ernten von stängelartigem Erntegut ausgebildet ist. Im Einzelnen nicht näher dargestellt ist in Arbeitsfahrtrichtung F eine vordere Fahrerkabine vorgesehen, der in Arbeitsfahrtrichtung F ein Vorsatzgerät in Gestalt eines Erntegerätes 2 vorgeordnet ist zum reihenunabhängigen Ernten von Mais und dgl. Erntegut. Darüber hinaus verfügt diese landwirtschaftliche Erntemaschine über eine zentrale Ernteguteinzug 3 mit Einzugswalzen 4, über die das geerntete Erntegut einer nachfolgenden, nicht gezeigten Häckseltrommel zugeführt werden kann.

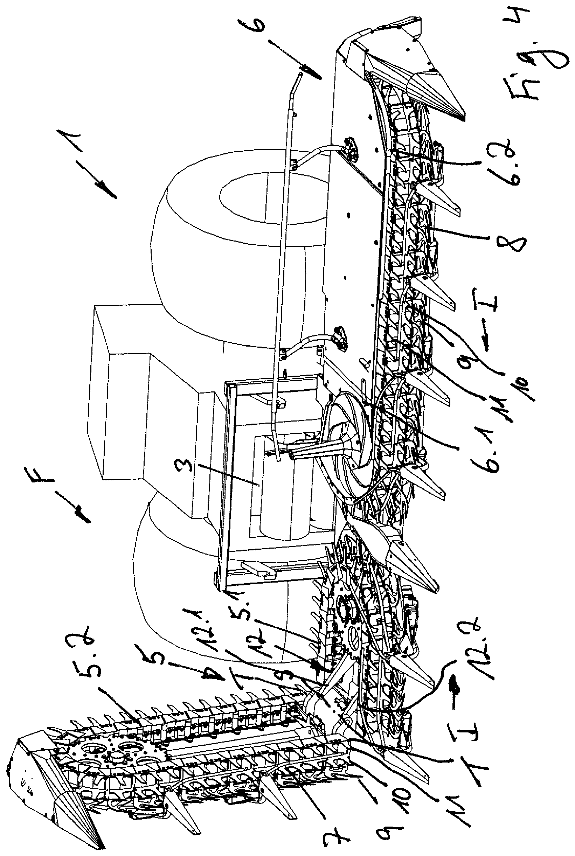

Im gezeigten Ausführungsbeispiel sind eine in Arbeitsfahrtrichtung F rechte Erntegeräteinheit 5 und eine in Arbeitsfahrtrichtung F linke Erntegeräteinheit 6 vorgesehen, die jeweils einen gemeinsamen Endlosförderer 7 (rechts) und Endlosförderer 8 (links) aufweisen. Die rechte Erntegeräteinheit 5 besteht aus einem zentralen, dem Ernteguteinzug 3 in Förderrichtung I vorgeordneten nicht verschwenkbaren Erntegerätteil 5.1 und aus dem aus einer Arbeitsstellung in eine hochverschwenkte Transportstellung verschwenkbaren äußeren rechten Erntegerätteil 5.2. Gleiches gilt auch für die in Arbeitsfahrtrichtung linke Erntegeräteinheit 6, die aus einem zentralen nicht verschwenkbaren und dem Ernteguteinzug 3 in Förderrichtung I direkt vorgeordneten Erntegerätteil 6.1 und aus dem linken äußeren und auch in eine Transportstellung verschwenkbaren Erntegerätteil 6.2 (Fig. 4) besteht.

Sowohl der linken Erntegeräteinheit 6 als auch der rechten Erntegeräteinheit 5 ist jeweils ein gemeinsamer Endlosförderer 7 (rechts) und ein Endlosförderer 8 (links) zugeordnet. Die beiden Endlosförderer 7 und 8 haben in drei Ebenen Mäh- und Fördermittel 9, 10 und 11, wobei die Fördermittel 11 in den obersten Ebenen angeordnet sind. In der untersten Ebene ist die Schneidebene mit den Mähmitteln 9 vorgesehen.

Das rechte äußere Erntegerätteil 5.2 ist in Fig. 4 in der um die Schwenkachse S in eine 90° hochgeschwenkten Transportstellung gezeigt. Dazu sind Trennstellen T sowohl beim gemeinsamen Endlosförderer 7 als auch beim gemeinsamen Endlosförderer 8 vorgesehen, die auch bei einem Grundrahmen der jeweiligen Erntegeräteinheit 5 und 6 vorgesehen sind.

Im Einzelnen nicht näher gezeigt kann auch ein Gelenk vorgesehen sein, welches in der obersten Ebene sowohl des vorderen Trums 7.2 als auch des hinteren Trums 7.1 des Endlosförderers 7 angeordnet sein kann, so dass zur Durchführung einer Verschwenkung der äußeren Erntegeräteteile 5.1 und 5.2 eine vollständige Trennung der gemeinsamen Endlosförderer 7,8 nicht notwendig wird. Lediglich für die unteren Ebenen der Endlosförderer 7,8 ist dann eine Trennstelle vorzusehen. Damit wird der Steuerungsprozess zur Überführung der Trennstellen bzw. der Gelenkstelle in den Bereich der Schwenkachse S der Trageinrichtung 12 der Erntegeräteteile 5.1 und 5.2 erleichtert. Bei der vollständigen Trennung der gemeinsamen Endlosförderer 7,8 ist es vorteilhaft, wenn vor der Einleitung des Schwenkvorganges der Erntegeräteteile 5.1 und 5.2 die Endlosförderer 7,8 mit den Trennstellen in eine definierte Position verbracht werden. Darunter ist eine Position zu verstehen, die im Bereich der Schwenkachsen S der Erntegeräteteile 5.1 und 5.2 liegt. Weiterhin ist es vorteilhaft, wenn die durch die Trennstellen sich ergebenden Abschnitte der Endlosförderer 7,8 während des Schwenkvorganges in dieser Position fixiert sind. Vorteilhaft kann der Prozess des Trennens der Endlosförderer 7,8 sowie des Fixierens in einer definierten Position durch eine Steuervorrichtung automatisiert erfolgen. Zur Feststellung einer definierten Position können vorteilhaft Sensoren eingesetzt sein, die im Zusammenwirken mit den hydraulisch, pneumatisch und/oder elektrisch betätigbaren Stellmitteln zur Ver- oder Entriegelung über die Steuervorrichtung ansteuerbar sind.

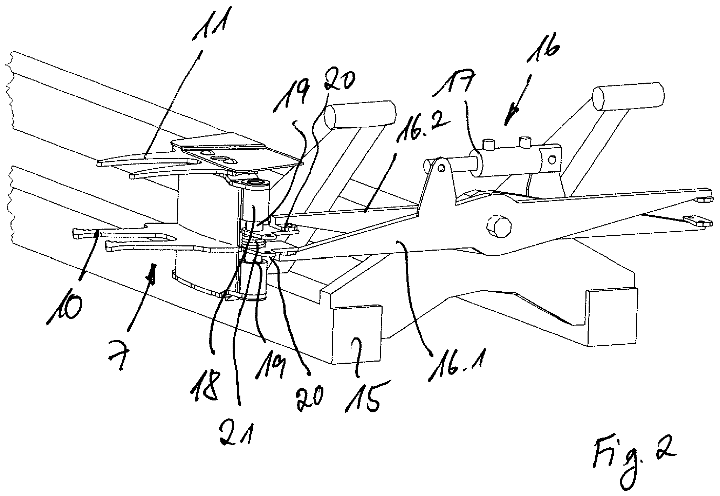

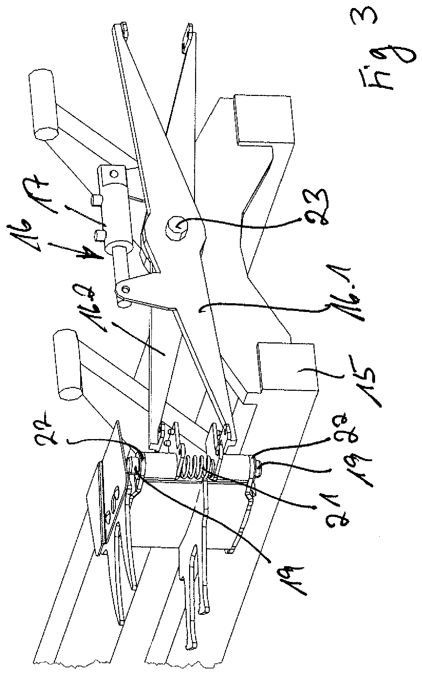

Um die gemeinsamen Endlosförderer 7 und 8 zu verriegeln und zu entriegeln ist an einem Rahmen 15 der Erntemaschine 1 (Fig. 3) eine Entriegelungs- und Verriegelungsvorrichtung 16 (Fig. 2 und Fig. 3) vorgesehen. Diese Entriegelungs- und Verriegelungsvorrichtung 16 dient dazu, den gemeinsamen Endlosförderer 7 zu trennen und zu verbinden. Dazu sind an der Entriegelungs- und Verriegelungsvorrichtung 16 hydraulisch, pneumatisch und/oder elektrisch betätigbare Stellmittel vorgesehen. In dem Ausführungsbeispiel nach den Figuren 2 und 3 ist dort ein Hydraulikzyklinder 17 vorgesehen, über den scherenartig zusammenwirkende Schwingen 16.1 und 16.2 zu betätigen sind. Dazu ist eine Verbindungsbuchse 18 an dem dort gezeigten Endlosförderer 7 vorgesehen, in die Bolzen 19 einzuführen sind, zwischen denen ein Federelement 21 angeordnet ist. In Fig. 2 haben die scherenartig zusammenwirkenden Schwingen 16.1, 16.2 nach entsprechender Betätigung des Hydraulikzylinders 17 das Federelement 21 zusammengedrückt, so dass die Bolzen 19 die Buchsen 18 freigeben (Entriegelungsstellung), wohingegen in Fig. 3 die scherenartigen Schwingen 16.1, 16.2 nach entsprechender Betätigung des Hydraulikzylinders 17 die Feder 21 entlastet haben, so dass die Bolzen 19 die Befestigungsansätze 22 an dem Endlosförderer 7 durchsetzen, wonach die Verriegelung hergestellt worden ist.

## Patentansprüche

1. Selbstfahrende landwirtschaftliche Erntemaschine (1) mit einem vor einer Fahrerkabine angeordneten und quer zur Fahrt- und Arbeitsrichtung (F) ausgerichteten Erntegerät (2), das als Mäh- und Fördereinrichtung ausgebildet ist und in Fahrt- und Arbeitsrichtung (F) eine linke Erntegeräteinheit (6) und eine rechte Erntegeräteinheit (5) mit jeweils einem Fördermittel (10, 11) aufweisenden Endlosförderer (7, 8) umfasst, wobei die Endlosförderer (7, 8) quer zur Arbeitsfahrtrichtung (F) einem zentralen Ernteguteinzug (3) Erntegut zufördern, wobei die in Arbeitsfahrtrichtung (F) linke Erntegeräteinheit (6) ein um eine zur Arbeitsfahrtrichtung (F) parallele Achse (S) aus einer Arbeitsstellung in eine Transportstellung und zurück verschwenkbares linkes Erntegerätteil (6.2) und die in Arbeitsfahrtrichtung (F) rechte Erntegeräteinheit (5) ein um eine zur Arbeitsfahrtrichtung (F) parallele Achse (S) aus einer Arbeitsstellung in eine Transportstellung und zurück verschwenkbares rechtes Erntegeräteteil (5.2) aufweist, dass dem jeweiligen linken und rechten Erntegerätteil (6.2, 5.2) ein zentrales, nicht verschwenkbares Erntegerätteil (5.1 bzw. 6.1) des Erntegerätes (2) mit einem Endlosförderbereich in Förderrichtung (I) nachgeordnet und dem Ernteguteinzug (3) vorgeordnet ist, **dadurch gekennzeichnet, dass**
das in Arbeitsfahrtrichtung (F) linke verschwenkbare Erntegerätteil (6.2) und das in Arbeitsfahrtrichtung (F) rechte verschwenkbare Erntegerätteil (5.2) in der Arbeitsstellung mit dem jeweils zugeordneten zentralen, dem Ernteguteinzug vorgeordneten Erntegerätteil (5.1, 6.1) der Erntegeräteinheit (5, 6) mit jeweils einem gemeinsamen Endlosförderer (7, 8) versehen sind, wobei am jeweiligen gemeinsamen Endlosförderer (7, 8) und/oder an einem dem jeweiligen gemeinsamen Endlosförderer (7, 8) zugeordneten Rahmen der Erntegeräteinheit (5, 6) zumindest eine Trennstelle (T) vorgesehen ist, an der das verschwenkbare linke bzw. das verschwenkbare rechte Erntegerätteil (5.2, 6.2) aus der Arbeitsstellung in die verschwenkte Transportstellung und zurück überführbar ist, wobei
der jeweils gemeinsame Endlosförderer (7, 8) jeder Erntegeräteinheit (5, 6) zwei Trennstellen (T) aufweist, einmal bei einem in Arbeitsfahrtrichtung (F) vorderen Trum und einmal bei einem in Arbeitsfahrtrichtung (F) hinteren Trum.

2. Selbstfahrende landwirtschaftliche Erntemaschine (1) nach Anspruch 1, **dadurch gekennzeichnet, dass** an dem, dem gemeinsamen Endlosförderer (7, 8) zugeordneten Rahmen (15) der Erntegeräteeinheit (5) zwei Trennstellen (T) im Bereich des gemeinsamen Endlosförderers (7, 8) vorgesehen sind, die in Arbeitsfahrtrichtung (F) vorne und einmal in Arbeitsfahrtrichtung (F) hinten gelegen sind.

3. Selbstfahrende landwirtschaftliche Erntemaschine (1) nach Anspruch 1, **dadurch gekennzeichnet, dass** das linke und das rechte Erntegerätteil (6.2, 5.2) jeweils Schwenkachsen (S) aufweisen, die an einer auf einem Grundrahmen (15) der Erntemaschine (1) abgestützten Trageeinrichtung (12) ausgebildet sind.

4. Selbstfahrende landwirtschaftliche Erntemaschine (1) nach Anspruch 3, **dadurch gekennzeichnet, dass** an der Trageeinrichtung (12) zwei mit Abstand zueinander vorgesehene Tragarme (12.1, 12.2) ausgebildet sind, an denen ein linkes Erntegerätteil (6.2) und ein rechtes Erntegerätteil (5.2) angelenkt sind.

5. Selbstfahrende landwirtschaftliche Erntemaschine (1) nach einem der Ansprüche 1 bis 4, **dadurch gekennzeichnet, dass** der jeweilige gemeinsame Endlosförderer (7, 8) sowohl der linken Erntegeräteeinheit (6) als auch der rechten Erntegeräteeinheit (5) jeweils ein Gelenk mit einer fahrtrichtungsparallelen Schwenkachse aufweist, über das ein im linken Erntegerätteil (6.2) bzw. im rechten Erntegerätteil (5.2) befindlicher Bereich des jeweiligen gemeinsamen Endlosförderer (7, 8) relativ zu dem in dem jeweils zugeordneten zentralen Erntegerätteil (6.1, 5.1) befindlicher Bereich des gemeinsamen Endlosförderers (7, 8) der Erntegeräteinheit (5, 6) verschwenkbar ist.

6. Selbstfahrende landwirtschaftliche Erntemaschine (1) nach Anspruch 5, **dadurch gekennzeichnet, dass** an dem jeweiligen gemeinsamen Endlosförderer (7, 8) eine Trennstelle (T) und mit dieser im Wesentlichen in Längsrichtung der Erntemaschine (1) fluchtend das Gelenk zur relativen Verschwenkung eines Teilbereichs des gemeinsamen Endlosförderers (7, 8) zu dem nicht verschwenkten Bereich des jeweiligen gemeinsamen Endlosförderers (7, 8) vorgesehen ist.

7. Selbstfahrende landwirtschaftliche Erntemaschine (1) nach einem der vorangehenden Ansprüche, **dadurch gekennzeichnet, dass** eine Steuervorrichtung vorgesehen ist, die den jeweiligen gemeinsamen Endlosförderer (7, 8) für einen beabsichtigten Schwenkvorgang des linken und/oder rechten Erntegerätteils (6.2, 5.2) aus einer Arbeitsstellung in eine Transportstellung in eine Position steuert, in der Trennstellen (T) und/oder ein Gelenk des jeweiligen gemeinsamen Endlosförderers (7, 8) im Bereich der Schwenkachsen (S) des zugeordneten Rahmens (15) der Erntegeräteeinheit (5, 6) gelegen sind.

8. Selbstfahrende landwirtschaftliche Erntemaschine (1) nach einem der Ansprüche 5 bis 7, **dadurch gekennzeichnet, dass** Fördermittel (10, 11) des Endlosförderers (7, 8) mit nach außen weisenden Schneid- und Halteelementen versehen sind, welche in mindestens zwei übereinanderliegenden Ebenen angeordnet sind, wobei die Trennstellen (T) in der unteren Ebene des jeweiligen gemeinsamen Endlosförderers (7, 8) und das Gelenk des jeweiligen gemeinsamen Endlosförderers (7, 8) in der oberen Ebene des jeweiligen gemeinsamen Endlosförderers (7, 8) gelegen sind.

9. Selbstfahrende landwirtschaftliche Erntemaschine (1) nach einem der Ansprüche 5 bis 7, **dadurch gekennzeichnet, dass** Fördermittel (10, 11) des Endlosförderers (7, 8) mit nach außen weisenden Schneid- und Halteelementen versehen sind, welche in mindestens zwei übereinanderliegenden Ebenen angeordnet sind, wobei die Trennstellen (T) sowohl in der unteren als auch in der oberen Ebene des jeweiligen gemeinsamen Endlosförderers (7, 8) gelegen sind.

10. Selbstfahrende landwirtschaftliche Erntemaschine (1) nach einem der vorangehenden Ansprüche **dadurch gekennzeichnet, dass** das jeweils linke und das jeweils rechte Erntegerätteil (5.2, 6.2) elektrisch, hydraulisch oder pneumatisch aus der Arbeitsstellung in die Transportstellung und zurück überführbar sind.

11. Selbstfahrende landwirtschaftliche Erntemaschine (1) nach einem der vorangehenden Ansprüche **dadurch gekennzeichnet, dass** an den Trennstellen (T) des jeweils gemeinsamen Endlosförderers (7, 8) eine Entriegelungs- und Verriegelungsvorrichtung (16) vorgesehen ist, um den gemeinsamen Endlosförderer (7, 8) zu trennen und zu verbinden.

12. Selbstfahrende landwirtschaftliche Erntemaschine (1) nach Anspruch 11, **dadurch gekennzeichnet, dass** die Entriegelungs- und Verriegelungsvorrichtung (16) hydraulisch, pneumatisch und/oder elektrisch betätigbare Stellmittel (17) zum Verbinden und zum Entriegeln des jeweiligen gemeinsamen Endlosförderers (7, 8) aufweist.

13. Selbstfahrende landwirtschaftliche Erntemaschine (1) nach Anspruch 11 oder 12, **dadurch gekennzeichnet, dass** die Entriegelungs- und Verriegelungsvorrichtung (16) nach Art einer scherenartigen Schwinge ausgestaltet ist mit um eine Schwenkachse (23) verschwenkbaren Schwingarmen (16.1, 16.2), die aufeinander zu und voneinander weg zu bewegen sind zum Entriegeln und zum Verriegeln des jeweiligen gemeinsamen Endlosförderers (7, 8).

14. Selbstfahrende landwirtschaftliche Erntemaschine (1) nach Anspruch 13, **dadurch gekennzeichnet, dass** zum Verbinden und zum Entriegeln des gemeinsamen Endlosförderers (7, 8) ein Verriegelungsglied (19) vorgesehen ist, an dem die Schwingarme (16.1, 16.2) der Verriegelungsvorrichtung angreifen.

15. Selbstfahrende landwirtschaftliche Erntemaschine (1) nach Anspruch 14, **dadurch gekennzeichnet, dass** das Verriegelungsglied (19) gegen die Kraft einer Feder (21) bewegbar ist, wobei nach einer Bewegung des Verriegelungsgliedes (19) der gemeinsame Endlosförderer (7, 8) entriegelbar ist und nach einer Gegenbewegung des Verriegelungsgliedes (19) der Endlosförderer (7, 8) verbindbar ist.

## Claims

1. Self-propelled agricultural harvesting machine (1) comprising a harvesting device (2) arranged in front of a driver's cab and oriented transversely to the traveling and working direction (F), which harvesting device is designed as a mowing and conveying apparatus and comprises a harvesting device unit (6) which is on the left and a harvesting device unit (5) which is on the right in the traveling and working direction (F), each comprising a continuous conveyor (7, 8) having conveying means (10, 11), the continuous conveyors (7, 8) conveying harvested material to a central harvested material intake (3) transversely to the working travel direction (F), the harvesting device unit (6) which is on the left in the working travel direction (F) having a left harvesting device part (6.2) that can be pivoted from a working position to a transport position and back about an axis (S) which is parallel to the working travel direction (F), and the harvesting device unit (5) which is on the right in the working travel direction (F) having a right harvesting device part (5.2) that can be pivoted from a working position to a transport position and back about an axis (S) which is parallel to the working travel direction (F), that in each case a central, non-pivoting harvesting device part (5.1 and 6.1, respectively) of the harvesting device (2) comprising a continuous conveying region is arranged, in the conveying direction (I), downstream of the left and of the right harvesting device part (6.2, 5.2) respectively and upstream of the harvested material intake (3),**characterized in that** in the working position the pivotable harvesting device part (6.2) which is on the left in the working travel direction (F) and the pivotable harvesting device part (5.2) which is on the right in the working travel direction (F) are provided with the respectively associated central harvesting device parts (5.1, 6.1) of the harvesting device units (5, 6), which parts are arranged upstream of the harvested material intake, each harvesting device unit comprising a common continuous conveyor (7, 8), at least one separation point (T) being provided on each common continuous conveyor (7, 8) and/or on a frame of each harvesting device unit (5, 6), which frame is associated with the relevant common continuous conveyor (7, 8), at which separation points the pivotable left and the pivotable right harvesting device part (5.2, 6.2) can each be moved from the working position to the pivoted transport position and back, the common continuous conveyor (7, 8) of each harvesting device unit (5, 6) having two separation points (T), one at a strand which is at the front in the working travel direction (F) and one at a strand which is at the rear in the working travel direction (F).

2. Self-propelled agricultural harvesting machine (1) according to claim 1, **characterized in that** two separation points (T) are provided on the frame (15) of the harvesting device unit (5), which frame is associated with the common continuous conveyor (7, 8), in the region of the common continuous conveyor (7, 8), which separation points are located at the front in the working travel direction (F) and one at the rear in the working travel direction (F).

3. Self-propelled agricultural harvesting machine (1) according to claim 1, **characterized in that** the left and the right harvesting device part (6.2, 5.2) have respective pivot axes (S) which are formed on a bearing apparatus (12) supported on a base frame (15) of the harvesting machine (1).

4. Self-propelled agricultural harvesting machine (1) according to claim 3, **characterized in that** two bearing arms (12.1, 12.2) which are spaced apart from each other are formed on the bearing apparatus (12), on which bearing arms a left harvesting device part (6.2) and a right harvesting device part (5.2) are articulated.

5. Self-propelled agricultural harvesting machine (1) according to any of claims 1 to 4, **characterized in that** each common continuous conveyor (7, 8), both that of the left harvesting device unit (6) and that of the right harvesting device unit (5), has an articulation with a pivot axis parallel to the traveling direction, via which articulation a region of the relevant common continuous conveyor (7, 8), which region is located respectively in the left harvesting device part (6.2) or in the right harvesting device part (5.2), can be pivoted relative to the region of the common continuous conveyor (7, 8) of the harvesting device unit (5, 6), which region is located in the respectively associated central harvesting device part (6.1, 5.1).

6. Self-propelled agricultural harvesting machine (1) according to claim 5, **characterized in that** a separation point (T) and the articulation, aligned therewith substantially in the longitudinal direction of the harvesting machine (1), are provided on each common continuous conveyor (7, 8) for the relative pivoting of a sub-region of the common continuous conveyor (7, 8) to the non-pivoted region of the relevant common continuous conveyor (7, 8).

7. Self-propelled agricultural harvesting machine (1) according to any of the preceding claims, **characterized in that** a controller is provided which controls the relevant common continuous conveyor (7, 8) for an intended pivoting operation of the left and/or right harvesting device part (6.2, 5.2) respectively, from a working position to a transport position and to a position in which separation points (T) and/or an articulation of the relevant common continuous conveyor (7, 8) are located in the region of the pivot axes (S) of the associated frame (15) of the harvesting device unit (5, 6).

8. Self-propelled agricultural harvesting machine (1) according to any of claims 5 to 7, **characterized in that** conveying means (10, 11) of the continuous conveyor (7, 8) are provided with outwardly facing cutting and holding elements which are arranged in at least two superimposed planes, the separation points (T) being located in the lower plane of each common continuous conveyor (7, 8) and the articulation of each common continuous conveyor (7, 8) being located in the upper plane of each common continuous conveyor (7, 8).

9. Self-propelled agricultural harvesting machine (1) according to any of claims 5 to 7, **characterized in that** conveying means (10, 11) of the continuous conveyor (7, 8) are provided with outwardly facing cutting and holding elements which are arranged in at least two superimposed planes, the separation points (T) being located in both the lower and the upper plane of each common continuous conveyor (7, 8).

10. Self-propelled agricultural harvesting machine (1) according to any of the preceding claims, **characterized in that** the left and the right harvesting device part (5.2, 6.2), respectively, can be moved electrically, hydraulically or pneumatically from the working position to the transport position and back.

11. Self-propelled agricultural harvesting machine (1) according to any of the preceding claims, **characterized in that** an unlocking and locking system (16) is provided at the separation points (T) of each common continuous conveyor (7, 8) in order to separate and connect the common continuous conveyor (7, 8).

12. Self-propelled agricultural harvesting machine (1) according to claim 11, **characterized in that** the unlocking and locking system (16) has hydraulically, pneumatically and/or electrically actuated actuators (17) for connecting and unlocking the relevant common continuous conveyor (7, 8).

13. Self-propelled agricultural harvesting machine (1) according to claim 11 or 12, **characterized in that** the unlocking and locking system (16) is designed in the manner of a scissor-like rocker comprising rocker arms (16.1, 16.2) that can be pivoted about a pivot pin (23) and which can be moved toward and away from each other to unlock and lock the relevant common continuous conveyor (7, 8).

14. Self-propelled agricultural harvesting machine (1) according to claim 13, **characterized in that** a locking member (19) is provided for connecting and unlocking the common continuous conveyor (7, 8), on which locking member the rocker arms (16.1, 16.2) of the locking system engage.

15. Self-propelled agricultural harvesting machine (1) according to claim 14, **characterized in that** the locking member (19) can be moved against the force of a spring (21), it being possible to unlock the common continuous conveyor (7, 8) after a movement of the locking member (19) and to connect the continuous conveyor (7, 8) after a counter-movement of the locking member (19).

## Revendications

1. Moissonneuse agricole automotrice (1) comportant un appareil à moissonner (2) disposé devant une cabine de conducteur et orienté transversalement à la direction de déplacement et de travail (F), lequel appareil à moissonner est conçu comme un système de fauchage et de transport et comprend, dans la direction de déplacement et de travail (F), un ensemble d'appareil à moissonner gauche (6) et un ensemble d'appareil à moissonner droit (5) comportant respectivement un transporteur sans fin (7, 8) présentant un moyen de transport (10, 11), dans laquelle les transporteurs sans fin (7, 8) amènent le produit de récolte à une alimentation de produit de récolte centrale (3), transversalement à la direction de déplacement de travail (F), dans laquelle l'ensemble d'appareil à moissonner gauche (6) dans la direction de déplacement de travail (F) présente une partie d'appareil à moissonner gauche (6.2) pouvant pivoter autour d'un axe (S) parallèle à la direction de déplacement de travail (F) d'une position de travail à une position de transport et inversement, et l'ensemble d'appareil à moissonner droit (5) dans la direction de déplacement de travail (F) présente une partie d'appareil à moissonner droit (5.2) pouvant pivoter autour d'un axe (S) parallèle à la direction de déplacement de travail (F) d'une position de travail à une position de transport et inversement, dans laquelle une partie d'appareil à moissonner (5.1 ou 6.1) centrale et non pivotante de l'appareil à moissonner (2) est disposée en aval de la partie d'appareil à moissonner (6.2, 5.2) gauche et droite respective, laquelle partie d'appareil à moissonner centrale et non pivotante comporte une zone de transport sans fin dans la direction de transport (I) et est disposée en amont de l'alimentation de produit de récolte (3),
**caractérisée en ce que** la partie d'appareil à moissonner (6.2) gauche pivotant dans la direction de déplacement de travail (F) et la partie d'appareil à moissonner (5.2) droite pivotant dans la direction de déplacement de travail (F) sont pourvues, en position de travail, de la partie d'appareil à moissonner (5.1, 6.1) centrale de l'ensemble d'appareil à moissonner (5, 6), laquelle partie d'appareil à moissonner est respectivement associée et disposée en amont de l'alimentation de produit de récolte, l'ensemble d'appareil à moissonner comportant respectivement un transporteur sans fin (7, 8) commun, dans laquelle il est prévu sur le transporteur sans fin (7, 8) commun respectif et/ou sur un châssis de l'ensemble d'appareil à moissonner (5, 6), lequel châssis est associé au transporteur sans fin (7, 8) commun respectif, au moins un point de séparation (T) au niveau duquel la partie d'appareil à moissonner gauche ou droite (5.2, 6.2) pivotante peut être transférée de la position de travail à la position de transport pivotée et inversement, dans laquelle le transporteur sans fin (7, 8) commun respectif de chaque ensemble d'appareil à moissonner (5, 6) présente deux points de séparation (T), l'un pour un brin avant dans la direction de déplacement de travail (F) et l'autre pour un brin arrière dans la direction de déplacement de travail (F).

2. Moissonneuse agricole automotrice (1) selon la revendication 1, **caractérisée en ce que**, dans la zone du transporteur sans fin (7, 8) commun, sont prévus sur le châssis (15) de l'ensemble d'appareil à moissonner (5), lequel châssis est associé au transporteur sans fin (7, 8) commun, deux points de séparation (T) qui sont situés à l'avant dans la direction de déplacement de travail (F) et l'autre à l'arrière dans la direction de déplacement de travail (F).

3. Moissonneuse agricole automotrice (1) selon la revendication 1, **caractérisée en ce que** la partie d'appareil à moissonner gauche ou droite (6.2, 5.2) présentent respectivement des axes de pivotement (S) qui sont conçus sur un support (12) prenant appui sur un châssis de base (15) de la moissonneuse (1).

4. Moissonneuse agricole automotrice (1) selon la revendication 3, **caractérisée en ce que** sont réalisés, prévus à distance l'un de l'autre sur le support (12), deux bras porteurs (12.1, 12.2) sur lesquels sont articulées une partie d'appareil à moissonner gauche (6.2) et une partie d'appareil à moissonner droite (5.2).

5. Moissonneuse agricole automotrice (1) selon l'une des revendications 1 à 4, **caractérisée en ce que** le transporteur sans fin (7, 8) commun respectif aussi bien de l'ensemble d'appareil à moissonner gauche (6) que de l'ensemble d'appareil à moissonner droite (5) présente respectivement une articulation comportant un axe de pivotement parallèle à la direction de déplacement, articulation par l'intermédiaire de laquelle une zone du transporteur sans fin (7, 8) commun respectif, laquelle zone est située dans la partie d'appareil à moissonner gauche (6.2) ou dans la partie d'appareil à moissonner droite (5.2), peut pivoter par rapport à la zone du transporteur sans fin (7, 8) commun de l'ensemble d'appareil à moissonner (5, 6), laquelle zone se trouve dans la partie d'appareil à moissonner centrale (6.1, 5.1) respectivement associée.

6. Moissonneuse agricole automotrice (1) selon la revendication 5, **caractérisée en ce qu'il** est prévu, sur le transporteur sans fin (7, 8) commun respectif, un point de séparation (T) et, en alignement avec celui-ci, sensiblement dans la direction longitudinale de la moissonneuse (1), l'articulation pour le pivotement relatif d'une zone partielle du transporteur sans fin (7, 8) commun par rapport à la zone non pivotée du transporteur sans fin (7, 8) commun respectif.

7. Moissonneuse agricole automotrice (1) selon l'une des revendications précédentes, **caractérisée en ce qu'il** est prévu un dispositif de commande qui commande le transporteur sans fin (7, 8) commun respectif pour un mouvement de pivotement voulu de la partie d'appareil à moissonner gauche ou droite (6.2, 5.2), d'une position de travail à une position de transport puis vers une position dans laquelle des points de séparation (T) et/ou une articulation du transporteur sans fin (7, 8) commun respectif sont situés dans la zone des axes de pivotement (S) du châssis (15) associé de l'ensemble d'appareil à moissonner (5, 6).

8. Moissonneuse agricole automotrice (1) selon l'une des revendications 5 à 7, **caractérisée en ce que** des moyens de transport (10, 11) du transporteur sans fin (7, 8) sont pourvus d'éléments de coupe et de maintien tournés vers l'extérieur, lesquels éléments sont disposés dans au moins deux plans superposés, dans laquelle les points de séparation (T) sont situés dans le plan inférieur du transporteur sans fin (7, 8) commun respectif et l'articulation du transporteur sans fin (7, 8) commun respectif est située dans le plan supérieur du transporteur sans fin (7, 8) commun respectif.

9. Moissonneuse agricole automotrice (1) selon l'une des revendications 5 à 7, **caractérisée en ce que** des moyens de transport (10, 11) du transporteur sans fin (7, 8) sont pourvus d'éléments de coupe et de maintien tournés vers l'extérieur, lesquels éléments sont disposés dans au moins deux plans superposés, dans laquelle les points de séparation (T) sont situés aussi bien dans le plan inférieur que dans le plan supérieur du transporteur sans fin (7, 8) commun respectif.

10. Moissonneuse agricole automotrice (1) selon l'une des revendications précédentes, **caractérisée en ce que** la partie d'appareil à moissonner gauche respective et la partie d'appareil à moissonner droite respective (5.2, 6.2) peuvent être transférées électriquement, hydrauliquement ou pneumatiquement de la position de travail à la position de transport et inversement.

11. Moissonneuse agricole automotrice (1) selon l'une des revendications précédentes, **caractérisée en ce qu'**un dispositif de déverrouillage et de verrouillage (16) est prévu aux points de séparation (T) du transporteur sans fin (7, 8) commun respectif afin de séparer et de relier le transporteur sans fin (7, 8) commun.

12. Moissonneuse agricole automotrice (1) selon la revendication 11, **caractérisée en ce que** le dispositif de déverrouillage et de verrouillage (16) présente des moyens de réglage (17) à actionnement hydraulique, pneumatique et/ou électrique pour la liaison et le déverrouillage du transporteur sans fin (7, 8) commun respectif.

13. Moissonneuse agricole automotrice (1) selon la revendication 11 ou 12, **caractérisée en ce que** le dispositif de déverrouillage et de verrouillage (16) est réalisé à la manière d'un oscillateur en forme de ciseaux et comportant des bras oscillants (16.1, 16.2) pouvant pivoter autour d'un axe de pivotement (23), lesquels bras oscillants peuvent être rapprochés et éloignés l'un de l'autre pour le déverrouillage et le verrouillage du transporteur sans fin (7, 8) commun respectif.

14. Moissonneuse agricole automotrice (1) selon la revendication 13, **caractérisée en ce que**, pour la liaison et le déverrouillage du transporteur sans fin (7, 8) commun, il est prévu un organe de verrouillage (19) sur lequel s'agrippent les bras oscillants (16.1, 16.2) du dispositif de verrouillage.

15. Moissonneuse agricole automotrice (1) selon la revendication 14, **caractérisée en ce que l**'organe de verrouillage (19) est mobile à l'encontre de la force d'un ressort (21), dans lequel le transporteur sans fin (7, 8) commun peut être déverrouillé après un mouvement de l'organe de verrouillage (19) et le transporteur sans fin (7, 8) peut être relié après un mouvement inverse de l'organe de verrouillage (19).
